# EUROPÄISCHE PATENTSCHRIFT

(11) **EP 2 305 447 B1**
(45) Veröffentlichungstag und Bekanntmachung des Hinweises auf die Patenterteilung: **12.11.2014**
(21) Anmeldenummer: 10181684.1
(22) Anmeldetag: 29.09.2010
(51) Int. Cl.: B29C 47/10, B29C 47/60, C08K 3/34, C08J 3/20

(54) **Verfahren zur Herstellung von Bauteilen aus einer thermoplastischen Formmasse, sowie Bauteile aus einer thermoplastischen Formmasse**
Method for producing components composed of thermoplastic moulding material and components composed of thermoplastic moulding material
Procédé de fabrication de composants à partir d'une masse de formage thermoplastique et composants constitué d'une masse de formage thermoplastique

(30) Priorität: 05.10.2009 EP 09172239
(43) Veröffentlichungstag der Anmeldung: 06.04.2011
(73) Patentinhaber: BASF SE, 67056 Ludwigshafen (DE)
(72) Erfinder: Suhm, Jürgen, 67551 Worms (DE); Steininger, Helmut, 67551 Worms (DE); Baumert, Martin, 69221 Dossenheim (DE); Dallner, Claus, 68159 Mannheim (DE); Weichmann, Jürgen, 67098 Bad Dürkheim (DE); Klenz, Rainer, 67454 Haßloch (DE); Eibeck, Peter, 67346 Speyer (DE); Heckmann, Walter, 69469 Weinheim (DE)

(56) Entgegenhaltungen:
- EP-A1- 1 405 874
- EP-A1- 2 017 305
- EP-A1- 2 017 306
- WO-A1-98/36022
- WO-A1-2005/040254
- CN-Y- 201 195 384
- DE-A1-102004 039 451
- JP-A- 2004 284 195
- US-A1- 2006 270 292

## Beschreibung

Die Erfindung betrifft ein Verfahren zur Herstellung von Bauteilen aus einer thermoplastischen Formmasse, wobei die thermoplastische Formmasse mindestens ein Schichtsilicat enthält. Die Erfindung betrifft weiterhin ein Bauteil aus einer thermoplastischen Formmasse, das nach dem Verfahren herstellbar ist.

Thermoplastische Formmassen finden mittlerweile in vielen Bereichen in der Industrie und auch im Haushalt Anwendung. Vorteil von thermoplastischen Formassen ist deren geringe Dichte im Vergleich zu metallischen Werkstoffen und deren leichte Verarbeitbarkeit. Zudem können Eigenschaften thermoplastischer Formmassen auf einfache Weise durch Zugabe geeigneter Additive eingestellt werden. So ist es zum Beispiel üblich, zur Steigerung von Festigkeit und Steifigkeit Schichtsilicate zuzugeben. Die Zugabe der Schichtsilicate hat jedoch meist eine Abnahme der Schlagzähigkeit und der Bruchdehnung der thermoplastischen Formmasse zur Folge. Die Abnahme der Schlagzähigkeit lässt sich zum Beispiel durch Zugabe anderer geeigneter Additive wieder ausgleichen. Dies hat jedoch den Nachteil, dass zusätzliche Additive benötigt werden, die wiederum Einfluss auf andere Eigenschaften der thermoplastischen Formmasse haben können.

Neben dem Ausgleich von negativ beeinflussten Eigenschaften durch Zugabe eines Additivs ist es alternativ auch möglich, insbesondere bei Einsatz eines Schichtsilicates, die Morphologie und die daraus resultierenden mechanischen Eigenschaften eines Bauteils aus einer thermoplastischen Formmasse durch die Verarbeitungsbedingungen zu beeinflussen. So ist es zum Beispiel bekannt, in teilkristallinen thermoplastischen Werkstoffen feinsphärolithische, optisch amorphe Strukturen und somit ein duktileres Verhalten in randschichtnahen Bereichen durch eine niedrige Werkzeugtemperatur zu erzielen. Nachteil hierbei ist jedoch wiederum, dass die integrale Steifigkeit und Festigkeit abnimmt und die Nachkristallisation zunimmt und damit eine geringe Maßhaltigkeit des im Allgemeinen durch Spritzguss hergestellten Bauteils erzielt wird.

Die Erhöhung der mechanischen Festigkeit in einem Polyamid durch ein im Polyamid dispergiertes Silicat ist zum Beispiel in DE- A 36 32 865 beschrieben. Die Silicatschichten enthalten Aluminium-Phyllosilicat oder Magnesiumphyllosilicat. Die einzelnen Silicatschichten sind jeweils 0,7 bis 1,2 nm dick. Der Zwischenabstand zwischen den Silicatschichten beträgt mindestens 2,5 nm. Der Anteil des in der Polymatrix dispergierten Schichtsilicats liegt im Bereich von 0,5 bis 150 Gewichtsteile pro 100 Gewichtsteile der Polymermatrix.

Die Verwendung eines Block-Polymers als Schlagzähmodifizierer ist in US-A 2008/0021138 offenbart. Das Block-Polymer, das als Schlagzähmodifizierer eingesetzt wird, ist aufgebaut aus einem aromatischen Monomer, einem Olefin-Monomer und einem Alkyl(meth)acrylat-Monomer. Eingesetzt wird der Schlagzähmodifizierer zur Schlagzähmodifizierung eines Silicat enthaltenden Polyamids.

Aufgabe der vorliegenden Erfindung ist es, ein Verfahren zur Herstellung von Bauteilen aus einer thermoplastischen Formmasse sowie ein Bauteil aus einer thermoplastischen Formmasse bereitzustellen, die bezüglich Schub- und Scherbeanspruchung eine erhöhte mechanische Belastbarkeit aufweisen, ohne dass zusätzlich ein Schlagzähmodifizierer eingesetzt werden muss.

Gelöst wird die Aufgabe durch ein Verfahren zur Herstellung von Bauteilen aus einer thermoplastischen Formmasse gemäß Anspruch 1.

Schneckenkolbenmaschinen im Sinne der vorliegenden Erfindung sind Extruder oder Spritzgießmaschinen.

Durch das erfindungsgemäße Verfahren wird gezielt ein Bauteil hergestellt, das einen Kern und eine äußere Schicht aufweist, wobei im Kern das Schichtsilicat ungeordnet oder in Form von Clustern vorliegt und in der äußeren Schicht orientiert in Form von Lamellen. Hieraus resultiert eine erhöhte Verschleiß- und Biegewechselfestigkeit von beispielsweise schub- und/oder scherbelasteten Bauteilen. Durch die orientierten Schichtsilicate in Form von Lamellen weist die Randschicht eine hohe Zugfestigkeit auf. Die Cluster der Schichtsilicate und die ungeordneten Schichtsilicate im Kern führen zu einem spröden Verhalten des Kunststoffs.

Bei Versagen stellt sich eine konventionelle Versagensstruktur im Kern ein und an der äußeren Schicht ergibt sich ein wabenartiges Bruchbild.

Bei Bauteilen, die schub- und/oder scherbelastet sind, ergibt sich durch die erfindungsgemäße Bauteilstruktur mit einem Kern, in dem das Schichtsilicat ungeordnet oder in Form von Clustern vorliegt und einer äußeren Schicht, in der das Schichtsilicat orientiert in Form von Lamellen vorliegt, eine Reduktion bei der Rissbildung bei entsprechender Belastung.

Ein weiterer Vorteil des erfindungsgemäßen Verfahrens ist, dass keine besonders niedrige Werkzeugtemperatur zur Erzeugung feinster sphärolithischer Strukturen in randschichtnahen Bereichen benötigt wird. Hiermit lässt sich auch die Maßhaltigkeit eines durch Spritzguss hergestellten Bauteils verbessern.

Die zur Herstellung des Bauteils verwendete thermoplastische Formmasse ist vorzugsweise ein teilkristalliner thermoplastischer Kunststoff. Geeignete teilkristalline thermoplastische Kunststoffe sind zum Beispiel Polyamide, Polyoxymethylen, Polyethylenterephthalat Polybutylenterephthalat, Polytetrafluorethylen, Polyurethan, Polypropylen oder Polyethylen. Neben der Verwendung von teilkristallinen thermoplastischen Kunststoffen können zur Herstellung des Bauteils jedoch auch amorphe thermoplastische Kunststoffe verwendet werden. Geeignete amorphe thermoplastische Kunststoffe sind zum Beispiel Polyvinylchlorid, Copolymere aus Vinylchlorid und Vinylacetat, Styrol-Acrylnitril-Copolymerisate, Acrylnitril-Butadien-Styrol-Copolymerisate, Polyvinylcarbazol, Polycarbonate, Polyethersulfon, Polysulfon oder Polyvinylacetat.

Bevorzugt zur Herstellung des Bauteils sind jedoch teilkristalline thermoplastische Kunststoffe. Besonders bevorzugt als teilkristalline thermoplastische Kunststoffe sind Polyamide. Geeignete Polyamide sind zum Beispiel Polyamid 6, Polyamid 11, Polyamid 6/6, Polyamid 6/10 oder Polyamid 6/12.

Das in der thermoplastischen Formmasse enthaltene Schichtsilicat liegt vorzugsweise in Form von Plättchen vor, die eine mittlere laterale Ausdehnung von weniger als 600 µm, mehr bevorzugt von weniger als 300 µm und insbesondere von weniger als 200 µm haben. Die Anzahl der Lamellen sollte maximal 10, bevorzugt maximal 5, insbesondere maximal 4 betragen und die Dicke einer Lamelle vorzugsweise maximal 1 nm. Der interlamellare Abstand liegt im Allgemeinen bei 1 bis 2 nm.

Der Anteil an Schichtsilikat in der Formmasse liegt vorzugsweise im Bereich von 0,05 bis 3 Gew.-% mehr bevorzugt im Bereich von 0,1 bis 1 Gew.-% und insbesondere im Bereich von 0,25 bis 0,75 Gew.-% bezogen auf die Gesamtmasse der thermoplastischen Formmasse.

Schichtsilicate zeichnen sich dadurch aus, dass das Verhältnis von Silizium zu Sauerstoff in den Schichtsilicaten 2 zu 5 beträgt. Schichtsilicate werden dabei in Zweischichtsilicate und Dreischichtsilicate unterteilt. Die einzelnen Schichten werden dabei jeweils durch Tetraederschichten gebildet. In den Schichtsilicaten können sich zwischen den Tetraederschichten zusätzlich Ionen befinden. Der Hohlraum zwischen zwei Schichten kann zum Beispiel mit -OH-Gruppen oder mit -O⁻Me⁺-Gruppen besetzt sein, wobei Me für beliebige Metalle stehen kann. Neben einfach geladenen Metallen können auch mehrfach geladene Metalle im Hohlraum enthalten sein, die dann jeweils mit mehreren Sauerstoffionen verknüpft sind. Die Schichten können durch die Dipol-Kräfte oder durch lonenbindung miteinander verknüpft sein. Schichtsilikate, die im Rahmen der vorliegenden Erfindung eingesetzt werden können, sind zum Beispiel Glimmer, Talk, Serpentin und Tonminerale. Bei den Glimmern wird unterschieden in gewöhnliche Kaliumglimmer wie Muskovit, Aluminoceladonit, Ferro-Aluminoceladonit, Celadonit, Ferroceladonit, Annit, Phlogopit, Siderophyllit, Polylithionit und Tainiolit. Ungewöhnliche Kaliumglimmer sind zum Beispiel Roscoelith, Chromphyllit, Boromuskovit, Eastonite, Hendricksit, Montdorit, Trilithionit, Masutomilit, Norrishit, Tetra-Ferri-Annite und Tetra-Ferriphlogopit. Weiterhin können Glimmer auch als Nicht-Kaliumglimmer, beispielsweise Aspidolit, Preiswerkit, Ephestit, Paragonit, Nanpingit, Sokolovait und Tobelit vorliegen. Geeignete Tonminerale sind zum Beispiel Kaolinit, Chrysotil, Illit, Montmorillonit, Beidellit, Nontronit, Saponit und Hectorit. Besonders bevorzugt als Schichtsilikate sind Tonminerale und davon insbesondere Montmorillonit.

In einer ersten Ausführungsform wird die Formmasse in Schritt (a) in einem Werkzeug des Extruders zu einem Granulat verarbeitet. Das Granulat stellt ein Halbzeug dar, das dann zu einem Bauteil geformt wird. Hierzu ist es zum Beispiel möglich, das Granulat einem weiteren Extruder zuzuführen, im Extruder aufzuschmelzen und durch ein Werkzeug zu einem Endlosprofil zu extrudieren. Alternativ ist es jedoch auch möglich und bevorzugt, dass das Granulat in einem Spritzgießprozess zu einem Bauteil zu formen. Hierzu wird das Granulat einer Spritzgießmaschine zugeführt, in der das Granulat zunächst aufgeschmolzen und dann in ein Werkzeug eingespritzt wird. Zur Granulatherstellung wird vorzugsweise ein Zweischneckenextruder verwendet, wobei insbesondere solche mit gleichsinnig drehenden Schnecken eingesetzt werden. Die Länge der Schnecken liegt dabei vorzugsweise im Bereich von 25·D bis 45·D, wobei D der Durchmesser der Schnecke ist.

Zur Formteilherstellung werden vorzugsweise Extruder beziehungsweise Spritzgießmaschinen eingesetzt, die drei Zonen umfassen, eine Einzugszone, eine Kompressionszone und eine Meteringzone. Die eingesetzten Extruder beziehungsweise Spritzgießmaschinen sind vorzugsweise Einschneckenmaschinen. Die Länge der Schnecke liegt dabei vorzugsweise im Bereich von 20·D bis 25·D, wobei D der Durchmesser der Schnecke ist. Die Zonen des Extruders beziehungsweise der Spritzgießmaschine sind vorzugsweise so gegliedert, dass die Einzugszone 30 bis 60, bevorzugt 40 bis 55, beispielsweise 50 % der Schneckenlänge umfasst, die Kompressionszone 15 bis 35, vorzugsweise 20 bis 30, beispielsweise 25 % der Schneckenlänge und die Meteringzone 15 bis 35, bevorzugt 20 bis 30, beispielsweise 25 % der Schneckenlänge umfasst.

Das Verhältnis der gewählten Gangtiefe ist abhängig vom Durchmesser der Schnecke. Mit zunehmendem Schneckendurchmesser nimmt das Verhältnis von Gangtiefe zum Schneckendurchmesser vorzugsweise ab. In Abhängigkeit vom Schneckendurchmesser liegt die Gangtiefe der Einzugszone vorzugsweise im Bereich von 4 bis 9 mm und die Gangtiefe der Meteringzone im Bereich von 2 bis 4 mm.

Wenn die thermoplastische Formmasse, aus der das Bauteil hergestellt wird, ein Polyamid ist, wird die Formmasse im Anschluss an die Einzugszone im Extruder beziehungsweise in der Spritzgießmaschine auf eine Temperatur im Bereich von 280 bis 290° C erwärmt. Die Temperatur im Heißkanal, das heißt im Kanal zwischen der Düse des Extruders beziehungsweise der Spritzgießmaschine und der Kavität im Werkzeug, liegt vorzugsweise ebenfalls im Bereich von 280 bis 290° C. Die Werkzeugtemperatur beträgt vorzugsweise 100 bis 120°C. Die Schnecke zum Schmelzen und Homogenisieren der thermoplastischen Formmasse wird vorzugsweise mit einer Umfangsgeschwindigkeit von max. 0,3 m/s betrieben. Der spezifische Staudruck im Extruder liegt vorzugsweise bei 50 bis 100 bar.

Das in Schritt (a) hergestellte Halbzeug aus der thermoplastischen Formmasse weist vorzugsweise eine Viskositätszahl von 180 bis 220, beispielsweise ungefähr 200, auf. Die Viskositätszahl wird im Allgemeinen bestimmt nach ISO 307. Eine hohe Viskositätszahl kann zum Beispiel durch Verwendung eines kurzen Extruders, zum Beispiel mit einem L/D-Verhältnis von maximal 40 erzielt werden.

Die Drehzahl der Schnecke wird niedrig gewählt, vorzugsweise im Bereich von 80 bis 200 min und das Drehmoment hoch. Ein geeignetes Drehmoment liegt zum Beispiel im Bereich von 60 bis 100 % des maximal zulässigen Drehmoments der eingesetzten Schneckenkolbenmaschine.

Die Erfindung betrifft weiterhin ein Bauteil aus einer thermoplastischen Formmasse mit einem Kern, in dem ein Schichtsilicat ungeordnet oder in Form von Clustern enthalten ist und einer äußeren Schicht, in der das Schichtsilicat orientiert in Form von Lamellen vorliegt. Das Bauteil ist herstellbar nach dem vorstehend beschriebenen Verfahren.

Die äußere Schicht, in der das Schichtsilicat orientiert in Form von Lamellen vorliegt, ist gegenüber dem Kern mit ungeordnetem Schichtsilicat oder in Form von Clustern vorliegendem Schichtsilicat duktil und weist eine hohe Zugfestigkeit auf. Dies führt insbesondere zu einer Erhöhung der Festigkeit bei einer Scherbeanspruchung oder einer Schubbeanspruchung des Bauteils. Durch die äußere Schicht, in der das Schichtsilicat orientiert in Form von Lamellen vorliegt, kann zum Beispiel eine Rissbildung bei einer aufgebrachten Schub- und/oder Scherbeanspruchung reduziert werden.

Die äußere Schicht weist vorzugsweise eine Schichtdicke von maximal 250 pm auf. Eine solche Schicht ist ausreichend, um dem Bauteil einerseits erhöhte Festigkeit, die sich durch die ungeordneten Schichtsilicate beziehungsweise in Form von Clustern vorliegenden Schichtsilicate im Kern ergibt, beizubehalten und gleichzeitig eine verbesserte Festigkeit gegenüber Schub- und/oder Scherbeanspruchung durch eine erhöhte Zugfestigkeit der äußeren Schicht zu erhalten.

Bei einer maximalen Schichtdicke von 250 pm der äußeren Schicht liegt die mittlere Anzahl der Lamellen aus dem Schichtsilicat in der äußeren Schicht vorzugsweise bei maximal 10. Besonders bevorzugt ist die mittlere Lamellenzahl in der äußeren Schicht 5, beispielsweise maximal 4. Dies ist ausreichend, um eine ausreichende Zugfestigkeit zur Erhöhung der Stabilität bei Schub- und/oder Scherbeanspruchungen zu erhalten.

Die thermoplastische Formmasse aus der das Bauteil gefertigt wird, ist vorzugsweise ein teilkristalliner Thermoplast, jedoch können auch amorphe Thermoplasten eingesetzt werden. Bevorzugt wird jedoch ein teilkristalliner Thermoplast eingesetzt, wie vorstehend beschrieben. Insbesondere ist der teilkristalline Thermoplast ein Polyamid.

Um zu vermeiden, dass Sphärolithe, die sich beim Aushärten eines teilkristallinen Thermoplast bilden, die Zugfestigkeit der äußeren Schicht negativ beeinflussen, ist es bevorzugt, wenn Sphärolithe, die der teilkristalline Thermoplast bildet, in der äußeren Schicht eine maximale Ausdehnung von 2 µm aufweisen. Bevorzugt ist es dabei, wenn die Größe der Sphärolithe graduell über einen Bereich von 100 bis 200 µm vom Rand ins Innere des Formteils zunimmt. Dabei ist es vorteilhaft, wenn in der äußersten, ungefähr 10 bis 20 µm breiten Randzone ein Gemisch aus Sphärolithen vorliegt, deren Durchmesser im Bereich von 200 nm bis 2 µm liegt. Die Größe der Sphärolithe, die sich beim Aushärten der teilkristallinen Thermoplaste bilden, kann zum Beispiel durch die Temperatur des Werkzeugs, in dem das Bauteil geformt wird, eingestellt werden. So führt zum Beispiel ein schnelleres Abkühlen der thermoplastischen Formmasse, die zum Beispiel durch eine niedrigere Werkzeugtemperatur erreicht wird, zum Ausbilden einer regelmäßigeren Sphärolithverteilung.

Neben der Werkzeugtemperatur lässt sich das Ausbilden der Sphärolithe jedoch auch durch Zugabe geeigneter Additive beeinflussen.

Neben Additiven zur Beeinflussung der Größe der Sphärolithe in teilkristallinen Thermoplasten können der thermoplastischen Formmasse auch weitere Additive zugegeben werden. Üblicherweise zugegebene Additive sind zum Beispiel Schlagzähmodifizierer, Weichmacher, Farbstoffe, Vernetzer, Nukleierungsmittel, Farbpigmente und/oder Entformungsmittel. Geeignete Additive zur Beeinflussung der Eigenschaften der thermoplastischen Formmasse sind dem Fachmann bekannt.

Bauteile, die sich durch das erfindungsgemäße Verfahren herstellen lassen, sind zum Beispiel Zahnräder, Laufräder, Kupplungselemente, Transportbandrollen, mechanische Torsionsdämpfer, Gehäuse, zum Beispiel für Elektrogeräte, als Transportgehäuse oder für optische Instrumente, Stuhlrollen, Rollen, Seilrollen, Hebelübertragungsglieder, Gleitelemente oder Gestellteile.

Insbesondere sind durch das erfindungsgemäße Verfahren hergestellte Bauteile Zahnräder. Auf Zahnräder wirkt im Bereich der Zähne eine Schubbeanspruchung, die bei durch Schichtsilicate verstärkten Polyamiden als Werkstoff für das Zahnrad zu einer Rissbildung führt, wenn keine äußere Schicht vorhanden ist, in der das Schichtsilicat in Form von Lamellen vorliegt. Durch den erfindungsgemäßen Aufbau des Zahnrades mit einem Kern, in dem Schichtsilicate ungeordnet oder in Clustern vorliegen und einer äußeren Schicht, in der die Schichtsilicate in Lamellenform vorliegen, wird die Festigkeit an den Zähnen des Zahnrades erhöht und die Rissbildung wird reduziert.

Insbesondere bei der Herstellung von Zahnrädern, kann die Herstellung sowohl durch Extrusion als auch durch Spritzguss erfolgen. Bei der Herstellung durch Extrusion wird zunächst ein Endlosprofil in Form des Zahnrades extrudiert und dieses Profil anschließend in einzelne Zahnräder geschnitten. Wenn das Zahnrad jedoch eine innere Struktur aufweisen soll, ist es bevorzugt, das Zahnrad durch ein Spritzgussverfahren herzustellen, so dass auch die innere Struktur direkt in einem Arbeitsgang hergestellt werden kann, ohne diese aus dem Vollen fräsen zu müssen.

### Beispiele

### Vergleichsbeispiel

In einem Zweischneckenextruder werden 99,02 Gew.-% eines Polyamids 6.6 (Ultramid® der BASF SE) und 0,98 Gew.-% Diphenylamin-Aceton-Formaldehyd-Kondensat (Flexamin® der Chemtura Corp.) zu einem Granulat verarbeitet, wobei die Zonen des Extruders auf 280 bis 290°C temperiert werden.

Das Granulat wird in einer Spritzgießmaschine mit einer Schmelzetemperatur von 290°C und einer Werkzeugtemperatur von 120°C zu einem Probekörper geformt. Das Biegeelastizitätsmodul des Probekörpers beträgt 393 MPa und die Biegespannung 20 MPa.

### Beispiel

In einem Zweischneckenextruder werden 98,02 Gew.-% eines Polyamids 6.6 (Ultramid® der BASF SE), 1 Gew.-% eines Schichtsilikats basierend auf Montmorillonit (Nanofil® 9 der Süd-Chemie AG) und 0,98 Gew.-% Diphenylamin-Aceton-Formaldehyd-Kondensat (Flexamin® der Chemtura Corp.) zu einem Granulat verarbeitet, wobei die Zonen des Extruders auf 280 bis 290°C temperiert werden.

Das Granulat wird in einer Spritzgießmaschine mit einer Schmelzetemperatur von 290°C und einer Werkzeugtemperatur von 120°C zu einem Probekörper geformt. Das Biegeelastizitätsmodul des Probekörpers beträgt 456 MPa und die Biegespannung 18 MPa.

## Patentansprüche

1. Verfahren zur Herstellung von Bauteilen aus einer thermoplastischen Formmasse, wobei die thermoplastische Formmasse mindestens ein Schichtsilicat enthält und die Bauteile zumindest eine äußere Schicht, in der das Schichtsilicat orientiert in Form von Lamellen vorliegt, und einen Kern, in dem das Schichtsilicat ungeordnet oder in Form von Clustern vorliegt, aufweisen, folgende Schritte umfassend:
(a) Zugabe der thermoplastischen Formmasse und des mindestens einen Schichtsilicats sowie gegebenenfalls weiterer Additive in eine Schneckenkolbenmaschine, wobei die Schneckenkolbenmaschine mindestens eine Schnecke umfasst, deren Verhältnis von Schneckenaußendurchmesser zu Schneckenkerndurchmesser in der Einzugszone im Bereich von 1,2 bis 1,6 liegt, zur Herstellung eines Halbzeugs,
(b) Schmelzen und Homogenisieren der thermoplastischen Formmasse in einer zweiten Schneckenkolbenmaschine mit mindestens einer Schnecke. wobei das Verhältnis von Gangtiefe zu Schneckendurchmesser in einer Meteringzone der mindestens einen Schnecke im Bereich von 0,03 bis 0,065 liegt,
(c) Formen der thermoplastischen Formmasse zu einem Bauteil.

2. Verfahren gemäß Anspruch 1, **dadurch gekennzeichnet, dass** die thermoplastische Formmasse ein teilkristalliner thermoplastischer Kunststoff ist.

3. Verfahren gemäß Anspruch 2, **dadurch gekennzeichnet, dass** der teilkristalline thermoplastische Kunststoff ein Polyamid ist.

4. Verfahren gemäß einem der Ansprüche 1 bis 3, **dadurch gekennzeichnet, dass** das Schichtsilicat in Form von Plättchen vorliegt, die eine mittlere laterale Ausdehnung von weniger als 600 µm haben.

5. Verfahren gemäß einem der Ansprüche 1 bis 4, **dadurch gekennzeichnet, dass** das Halbzeug ein Granulat ist.

6. Verfahren gemäß Anspruch 5, **dadurch gekennzeichnet, dass** das Granulat in einem Spritzgussprozess zu dem Bauteil geformt wird.

7. Verfahren gemäß einem der Ansprüche 1 bis 4, **dadurch gekennzeichnet, dass** aus dem Granulat in einem Werkzeug eines Extruders ein Endlosprofil als Bauteil hergestellt wird.

8. Verfahren gemäß einem der Ansprüche 1 bis 7, **dadurch gekennzeichnet, dass** das Bauteil ein Zahnrad ist.

9. Bauteil aus einer thermoplastischen Formmasse mit einem Kern, in dem ein Schichtsilicat ungeordnet oder in Form von Clustern enthalten ist, und einer äußeren Schicht, in der das Schichtsilicat orientiert in Form von Lamellen vorliegt, herstellbar nach einem Verfahren gemäß einem der Ansprüche 1 bis 8.

10. Bauteil gemäß Anspruch 9, **dadurch gekennzeichnet, dass** die äußere Schicht eine Schichtdicke von maximal 250 µm aufweist.

11. Bauteil gemäß Anspruch 9 oder 10, **dadurch gekennzeichnet, dass** die mittlere Anzahl der Lamellen aus dem Schichtsilicat in der äußeren Schicht maximal 10 ist.

12. Bauteil gemäß einem der Ansprüche 9 bis 11, **dadurch gekennzeichnet, dass** die thermoplastische Formmasse ein teilkristalliner Thermoplast ist.

13. Bauteil gemäß Anspruch 12, **dadurch gekennzeichnet, dass** der teilkristalline Thermoplast ein Polyamid ist.

14. Bauteil gemäß Anspruch 12 oder 13, **dadurch gekennzeichnet, dass** Sphärolithe, die der teilkristalline Thermoplast bildet, in der äußeren Schicht eine maximale Ausdehnung von 2 µm aufweisen.

## Claims

1. A process for the production of components made of a thermoplastic molding composition, where the thermoplastic molding composition comprises at least one phyllosilicate and the components have at least one exterior layer in which the phyllosilicate is present in the form of oriented lamellae, and have a core in which the phyllosilicate is present in unordered form or in the form of clusters, comprising the following steps:
(a) addition of the thermoplastic molding composition and of the at least one phyllosilicate and also optionally of further additives to a reciprocating-screw machine, where the reciprocating-screw machine comprises at least one screw, where the ratio of external screw diameter to screw core diameter in the feed zone is in the range from 1.2 to 1.6, to produce a semifinished product,
(b) melting and homogenization of the thermoplastic molding composition in a second reciprocating-screw machine with at least one screw, where the ratio of flight depth to screw diameter in a metering zone of the at least one screw is in the range from 0.03 to 0.065,
(c) molding of the thermoplastic molding composition to give a component.

2. The process according to claim 1, wherein the thermoplastic molding composition is a semicrystalline thermoplastic.

3. The process according to claim 2, wherein the semicrystalline thermoplastic is a polyamide.

4. The process according to any of claims 1 to 3, wherein the phyllosilicate is present in the form of platelets which have an average lateral dimension of less than 600 µm.

5. The process according to any of claims 1 to 4, wherein the semifinished product is pellets.

6. The process according to claim 5, wherein the pellets are molded in an injection-molding process to give the component.

7. The process according to any of claims 1 to 4, wherein the pellets are used to produce a continuous profile, as component, in an extruder tool.

8. The process according to any of claims 1 to 7, wherein the component is a gear wheel.

9. A component made of a thermoplastic molding composition with a core which comprises a phyllosilicate in unordered form or in the form of clusters, and with an exterior layer in which the phyllosilicate is present in the form of oriented lamellae, capable of production by a process according to any of claims 1 to 8.

10. The component according to claim 9, wherein the thickness of the exterior layer is at most 250 µm.

11. The component according to claim 9 or 10, wherein the average number of the lamellae made of the phyllosilicate in the exterior layer is at most 10.

12. The component according to any of claims 9 to 11, wherein the thermoplastic molding composition is a semicrystalline thermoplastic.

13. The component according to claim 12, wherein the semicrystalline thermoplastic is a polyamide.

14. The component according to claim 12 or 13, wherein spherulites formed by the semicrystalline thermoplastic have a maximum dimension of 2 µm in the exterior layer.

## Revendications

1. Procédé pour la fabrication d'éléments de construction à partir d'une matière à mouler thermoplastique, la matière à mouler thermoplastique contenant au moins un silicate lamellaire et les éléments de construction comportant au moins une couche externe, dans laquelle le silicate lamellaire se trouve orienté sous forme de lamelles, et un noyau, dans lequel le silicate lamellaire est présent sans ordre ou sous forme d'amas, comprenant les étapes suivantes :
(a) introduction de la matière à mouler thermoplastique et dudit au moins un silicate lamellaire ainsi qu'éventuellement d'autres additifs dans une machine à vis-piston, la machine à piston à vis comprenant au moins une vis, dont le rapport du diamètre externe de la vis au diamètre du corps de la vis se situe, dans la zone d'alimentation, dans la plage de 1,2 à 1,6, pour la production d'un produit semi-fini,
(b) fusion et homogénéisation de la matière à mouler thermoplastique dans une deuxième machine à vis-piston comportant au moins une vis, le rapport de la profondeur du filet au diamètre de la vis se situant, dans une zone d'homogénéisation de ladite au moins une vis, dans la plage de 0,03 à 0,065,
(c) moulage de la matière à mouler thermoplastique en un élément de construction.

2. Procédé selon la revendication 1, **caractérisé en ce que** la matière à mouler thermoplastique est une matière synthétique thermoplastique partiellement cristalline.

3. Procédé selon la revendication 2, **caractérisé en ce que** la matière synthétique thermoplastique partiellement cristalline est un polyamide.

4. Procédé selon l'une quelconque des revendications 1 à 3, **caractérisé en ce que** le silicate lamellaire se trouve sous forme de plaquettes qui ont une extension latérale moyenne de moins de 600 µm.

5. Procédé selon l'une quelconque des revendications 1 à 4, **caractérisé en ce que** le produit semi-fini est un granulé.

6. Procédé selon la revendication 5, **caractérisé en ce qu'**on moule le granulé en l'élément de construction dans un processus de moulage par injection.

7. Procédé selon l'une quelconque des revendications 1 à 4, **caractérisé en ce qu'**à partir du granulé on fabrique dans un outil ou une extrudeuse un profilé continu en tant qu'élément de construction.

8. Procédé selon l'une quelconque des revendications 1 à 7, **caractérisé en ce que** l'élément de construction est une roue dentée.

9. Élément de construction à base d'une matière à mouler thermoplastique comportant un noyau, dans lequel le silicate lamellaire est présent sans ordre ou sous forme d'amas, et une couche externe, dans laquelle le silicate lamellaire se trouve orienté sous forme de lamelles, pouvant être produit conformément à un procédé selon l'une quelconque des revendications 1 à 8.

10. Élément de construction selon la revendication 9, **caractérisé en ce que** la couche externe présente une épaisseur de couche de 250 µm au maximum.

11. Élément de construction selon la revendication 9 ou 10, **caractérisé en ce que** le nombre moyen des lamelles du silicate lamellaire dans la couche externe est de 10 au maximum.

12. Élément de construction selon l'une quelconque des revendications 9 à 11, **caractérisé en ce que** la matière à mouler thermoplastique est une matière thermoplastique partiellement cristalline.

13. Élément de construction selon la revendication 12, **caractérisé en ce que** la matière thermoplastique partiellement cristalline est un polyamide.

14. Élément de construction selon la revendication 12 ou 13, **caractérisé en ce que** les sphérolites que forme la matière thermoplastique partiellement cristalline présentent dans la couche externe une extension maximale de 2 µm.
